(19) Europäisches Patentamt / European Patent Office / Office européen des brevets

(11) **EP 2 594 445 B1**

(12) **EUROPEAN PATENT SPECIFICATION**

(45) Date of publication and mention
of the grant of the patent:
**08.03.2017 Bulletin 2017/10**

(51) Int Cl.:
***B60W 30/19*** *(2012.01)*      ***B60W 20/00*** *(2016.01)*
***B60W 10/08*** *(2006.01)*      ***B60W 10/11*** *(2012.01)*
*B60K 6/48* *(2007.10)*

(21) Application number: **12193039.0**

(22) Date of filing: **16.11.2012**

(54) **GEAR SHIFT CONTROL DEVICE FOR HYBRID VEHICLE DRIVE SYSTEM**

GETRIEBESCHALTUNG-STEUERUNGSVORRICHTUNG FÜR EIN HYBRIDFAHRZEUG-ANTRIEBSSYSTEM

DISPOSITIF DE COMMANDE DE CHANGEMENT DE VITESSE POUR SYSTÈME D'ENTRAÎNEMENT DE VÉHICULE HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2011 JP 2011250795**

(43) Date of publication of application:
**22.05.2013 Bulletin 2013/21**

(73) Proprietor: **AISIN AI CO., LTD.**
**Aichi-ken, 445-0006 (JP)**

(72) Inventors:
• **Terakawa, Tomomitsu**
**Kariya-shi, Aichi, 448-8650 (JP)**
• **Hosoi, Yasuhiro**
**Kariya-shi, Aichi, 448-8650 (JP)**
• **Kitamura, Yuichiro**
**Kariya-shi, Aichi, 448-8650 (JP)**

• **Suzuki, Yoshihide**
**Kariya-shi, Aichi, 448-0027 (JP)**
• **Ueda, Katsunori**
**Tokyo, 108-8410 (JP)**
• **Yoshida, Shigeyuki**
**Tokyo, 108-8410 (JP)**
• **Hirao, Shunichi**
**Tokyo, 108-8410 (JP)**
• **Miyazaki, Takeshige**
**Nishio-shi, Aichi, 445-0006 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**EP-A2- 1 209 015        EP-A2- 1 352 775**
**WO-A1-2005/012022      US-A1- 2004 147 365**

**Description**

TECHNICAL FIELD

This disclosure generally relates to a gear shift control device for a hybrid vehicle drive system provided with an engine and a motor that serve as drive sources.

BACKGROUND DISCUSSION

Various known drive systems for hybrid vehicles each provided with an engine and a motor which serve as drive sources, are practically implemented in accordance with wide-spread use of hybrid vehicles. For example, according to a configuration of a known drive system for a hybrid vehicle, an input shaft of an automatic transmission is connected to an output shaft of an engine via a clutch and a motor is connected between an output shaft of the automatic transmission and driving wheels. According to the foregoing configuration, a motor generator serving as a motor having an electric generating function is adopted to the known drive system; therefore, a separate generator is most likely unnecessary in the known drive system. Further, for example, an automated manual transmission (which will be hereinafter referred to as an AMT), which is structured to be automated by adding an actuator to a manual transmission selectively engaging a set of gears among plural sets of gears, may be applied as the automatic transmission in the known drive system (which will be also referred to as a hybrid vehicle drive system). The AMT provided with a clutch at an input side excels in giving a driver a feeling that torque increases in accordance with an operation of an accelerator during transmission of the torque, compared to a planetary gear type automatic transmission provided with a torque converter at an input side.

It is preferable that the feeling that torque increases in accordance with an operation of an accelerator during transmission of the torque is ensured during a gear shift operation and it is preferable that a loss of acceleration feel is not generated in a condition where the clutch is in a disconnected state. JP2002-188716A (i.e., hereinafter referred to as Patent reference 1) discloses a power transmission apparatus for a hybrid vehicle, which eliminates a loss of acceleration feel during a gear shift operation. The power transmission apparatus disclosed in Patent reference 1 includes an internal combustion engine, a transmission, a clutch arranged between the internal combustion engine and the transmission, an electric motor arranged between the clutch and driving wheels, and a control portion. The control portion is configured to actuate the electric motor before bringing the clutch in a disconnected state upon detecting a shift point. Thus, according to Patent reference 1, because a drive torque from the electric motor is transmitted to the driving wheels even if a drive torque from the internal combustion engine is not transmitted to the driving wheels due to the disconnection of the clutch, the driving wheels are not assumed to be in a completely driven state. Further, noises and vibrations because of mechanical shakiness are not generated at the time of the gear shift operation. In addition, a shift feel is enhanced because the loss of acceleration feel is eliminated during the gear shift operation.

According to the known hybrid vehicle drive system (the power transmission apparatus), for example, disclosed in Patent reference 1, the clutch is brought in a half-connected state before a gear shift operation is conducted; thereby, the driving torque (an engine torque) of the internal combustion engine (an engine) is replaced by the drive torque (a motor torque) of the electric motor. Then, the gear shift operation is completed; thereafter, the motor torque may be replaced by the engine torque. As a result, transmission of a drive torque for driving the driving wheels is not interrupted during the gear shift operation and the hybrid vehicle may be driven in a stable moving condition. In addition, a driver of the hybrid vehicle does not feel that a loss of acceleration feel is generated during the gear shift operation. In a case where the motor torque is inappropriate during the gear shift operation, the drive torque obtained as a sum of the engine torque and the motor torque may drastically vary to therefore generate a shift shock, therefore deteriorating a shift feel. Accordingly, it is appropriate that a motor torque for compensating a reduction of the engine torque is generated during the gear shift operation in order to minimize variations of the drive torque. However, a direct detection of the engine torque is difficult and thus it is not easy to determine an appropriate amount of the motor torque.

Engine torque may be generally estimated from a torque characteristic map. The torque characteristic map includes a rotation speed of an output shaft of an engine, plotted on a horizontal axis, and engine torque plotted on a vertical axis. In addition, the torque characteristic map represents dependence of the engine torque on the rotation speed of the output shaft of the engine by multiple curved lines based on a parameter of a throttle opening angle (fuel supply amount). By applying a rotation speed of the output shaft and a throttle opening angle at a certain point in time to the torque characteristic map, an engine torque at the certain point in time may be estimated. However, the torque characteristic map is a map representing static torque characteristics in a state where the engine is in a constant operation mode. Therefore, the engine toque may not be precisely estimated from the torque characteristic map in a case where the rotation speed of the output shaft of the engine varies, for example, during a gear shift operation.

For example, at the time of an upshift operation from a low-speed stage to a high-speed stage, a clutch is engaged, thereby reducing a rotation speed of an engine. In such case, a drive torque actually transmitted to driving wheels becomes larger than an engine torque obtained from the torque characteristic map, at a certain time while the rotation speed of the engine is decreasing. This is because a flywheel is generally arranged at an output shaft of the engine and inertia torque accumulates to be added to engine torque to be therefore the drive torque actually transmitted to the driving wheels. Therefore, in a case where a motor toque is generated so as to compensate the engine torque obtained from the torque characteristic map, the drive torque actually transmitted to the driving wheels is increased by the inertia torque, therefore generating a shift shock.

A need thus exists for a gear shift control device for a hybrid vehicle drive system, which eliminates a loss of acceleration feel and reduces a shift shock during a gear shift operation, the hybrid vehicle drive system being provided with an engine, a motor, a clutch, and an automatic transmission and being an object to be controlled by the gear shift control device.

Further prior art is known from US 2004/147365 A1 which shows the features of the preamble of claim 1.

SUMMARY

According to the invention, a gear shift control device for a hybrid vehicle drive system for controlling the hybrid vehicle drive system which comprises an automatic transmission including an input shaft configured to rotate by an engine torque which is outputted from an output shaft of an engine mounted to a vehicle and which is controlled by an output control mechanism, and an output shaft rotatably connected to a driving wheel, the automatic transmission selectively engaging one of plural gear sets of a gear train by a gear switching mechanism, the gear train allowing the input shaft and the output shaft to rotatably connect to each other with various gear ratios, a clutch configured to be operated between a connected state where the output shaft of the engine and the input shaft of the automatic transmission are rotatably connected to each other and a disconnected state where the output shaft and the input shaft are disconnected from each other, a clutch actuation mechanism adjusting a clutch torque transmitted by the clutch to the input shaft of the automatic transmission, and a motor rotatably connected to the output shaft of the automatic transmission and the driving wheel, the motor generating a motor torque which is addable to the engine torque and driving the driving wheel by the motor torque, the gear shift control device controlling the hybrid vehicle drive system to change a selection of the gear sets of the gear train of the automatic transmission, the gear shift control device including a torque indication means for indicating a drive torque required for the driving wheel as a driver request torque converted into the engine torque, the drive torque being determined by an operation amount of an acceleration means operated by a driver, a gear shift control means for, when a gear shift condition is fulfilled, reducing the engine torque by the output control mechanism and driving the motor to generate the motor torque, for bringing the clutch in the disconnected state by the clutch actuation mechanism, for, after changing the selection of the gear sets of the gear train by the gear switching mechanism, returning the clutch to the connected state by the clutch actuation mechanism, and for reducing the motor torque and increasing the engine torque, and a motor torque computing means for computing the motor torque on the basis of a first subtraction value during a period of time while a rotational difference obtained by subtracting a rotation speed of the input shaft of the automatic transmission from a rotation speed of the output shaft of the engine exceeds a first predetermined value after changing the selection of the gear sets of the gear train by the gear switching mechanism so as to increase the gear ratios, the first subtraction value being obtained by subtracting the clutch torque from the driver request torque.

As described above, according to the gear shift control device of the invention, during a period of time while the rotational difference obtained by subtracting the rotation speed of the input shaft of the automatic transmission from the rotation speed of the output shaft of the engine exceeds the first predetermined value after changing the selection of the gear sets of the gear train by the gear switching mechanism so as to increase the gear ratios (after an upshift operation), the motor torque is obtained from the first subtraction value obtained by subtracting the clutch torque from the driver request torque. In general, at a time right after the upshift operation, the rotation speed of the output shaft of the engine is greater than the rotation speed of the input shaft of the automatic transmission. At this time, the engine torque is increased so as to gradually reduce the rotational difference between the rotation speed of the output shaft and the rotation speed of the input shaft in a state the clutch is brought in a half-connected state. Here, while the rotational difference is being reduced, torque in which the engine torque includes inertia torque generated due to the rotational change of the output shaft is transmitted to the input shaft of the automatic transmission. Therefore, in the case of controlling a drive torque to be transmitted to the driving wheel, the drive torque may be further precisely computed by using the clutch torque, in comparison with a case to use an estimate value of the engine torque, which is obtained from a torque characteristic map. Accordingly, while the rotational difference is large, the motor torque corresponding to the first subtraction value is generated by the motor; thereby, the drive torque actually transmitted to the driving wheel may be substantially equivalent to the driver request torque. As a result, a loss of acceleration feel during a gear shift operation may be eliminated and a shift shock may be minimized.

According to a further aspect of the invention, when the rotational difference is decreased to be equal to or lower than a second predetermined value after changing the selection of the gear sets of the gear train by the gear switching mechanism so as to increase the gear ratios, the motor torque computing means computes the motor torque on the basis of a second subtraction value obtained by subtracting an estimate value of the engine torque from the driver request torque.

In particular, as the connected state of the clutch is enhanced and the rotational difference reduces, the clutch torque only indicates an amount of a transmissible torque and does not indicate an amount of the drive torque actually transmitted to the driving wheel. Therefore, in comparison with a case to use the clutch torque, the drive torque for the driving wheel may be further precisely computed by using the estimate value of the engine torque, which is obtained from the torque characteristic map. Thus, when the rotational difference is reduced, the motor torque corresponding to the second subtraction value is generated by the motor; thereby, the drive torque actually transmitted to the driving wheel may be substantially equivalent to the driver request torque. As a result, a loss of acceleration feel during a gear shift operation may be eliminated and a shift shock may be minimized.

According to a further aspect of the invention, the second predetermined value is lower than the first predetermined value. The motor torque computing means utilizes the first subtraction value until the rotational difference reaches the second predetermined value while gradually decreasing after changing the selection of the gear sets of the gear train by the gear switching mechanism so as to increase the gear ratios. The motor torque computing means utilizes the second subtraction value in a case where the rotational difference is decreased to be equal to or lower than the second predetermined value. In a case where the rotational difference decreased to be equal to or lower than the second predetermined value varies to exceed the second predetermined value and does not exceed the first predetermined value, the motor torque computing means continuously utilizes the second subtraction value. In a case where the rotational difference decreased again exceeds the first predetermined value, the motor torque computing means utilizes the first subtraction value.

According to the gear shift control device of the invention, hysteresis is generated in rotation determination by comparing the rotational difference with the first predetermined value and the second predetermined value, thereby determining which to use the first subtraction value or the second subtraction value. Therefore, for example, even in a case where the rotational difference repeatedly increases and decreases near a boundary area (such variation is called hunting), the motor torque may be restricted from been frequently shifted between the first subtraction value and the second subtraction value. As a result, the gear shift control device may stably operate.

According to a further aspect of the invention, when a speed reduction ratio between the output shaft of the engine and the driving wheel is defined as an engine speed reduction ratio and a speed reduction ratio between an output shaft of the motor and the driving wheel is defined as a motor speed reduction ratio, the motor torque computing means computes a motor torque at the output shaft of the motor by multiplying the first subtraction value or the second subtraction value by the engine speed reduction ratio and by dividing the multiplied first subtraction value or the multiplied second subtraction value by the motor speed reduction ratio.

As described above, according to the gear shift control device of the invention, the motor torque at the output shaft of the motor is generated by multiplying the first subtraction value or the second subtraction value by the engine speed reduction ratio and by dividing the multiplied first subtraction value or the multiplied second subtraction value by the motor speed reduction ratio. Each of the engine torque, the clutch torque, and the driver request torque corresponds to an amount of torque at the output shaft of the engine. In addition, the drive torque for the driving wheel is computed by considering the engine speed reduction ratio and the motor speed reduction ratio; thereby, the motor torque at the output shaft of the motor may be obtained. As a result, the motor is appropriately controlled during the gear shift control, thereby generating an appropriate amount of the motor torque.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view of a configuration of a hybrid vehicle drive system which is an object to be controlled by a gear shift control device according to an embodiment disclosed here;
Fig. 2 is an explanatory drawing schematically showing configurations of an engine, an automatic transmission, and a clutch that are shown in Fig. 1;
Fig. 3 is a graph showing torque transmission characteristics of the clutch according to the embodiment disclosed here;
Fig. 4 is a timeline chart showing a control operation of the gear shift control device according to the embodiment;
Fig. 5 is a flowchart for describing an arithmetic processing of a motor torque computing means;
Fig. 6 is an explanatory chart showing a function of the gear shift control device according to the embodiment;
Fig. 7 is an explanatory chart showing a function of a first known gear shift control device where a motor torque is generated only on the basis of an engine torque estimate value after changing gears of a gear train is completed; and
Fig. 8 is an explanatory chart showing a function of a second known gear shift control device where a motor torque is not generated throughout a gear shift operation.

DETAILED DESCRIPTION

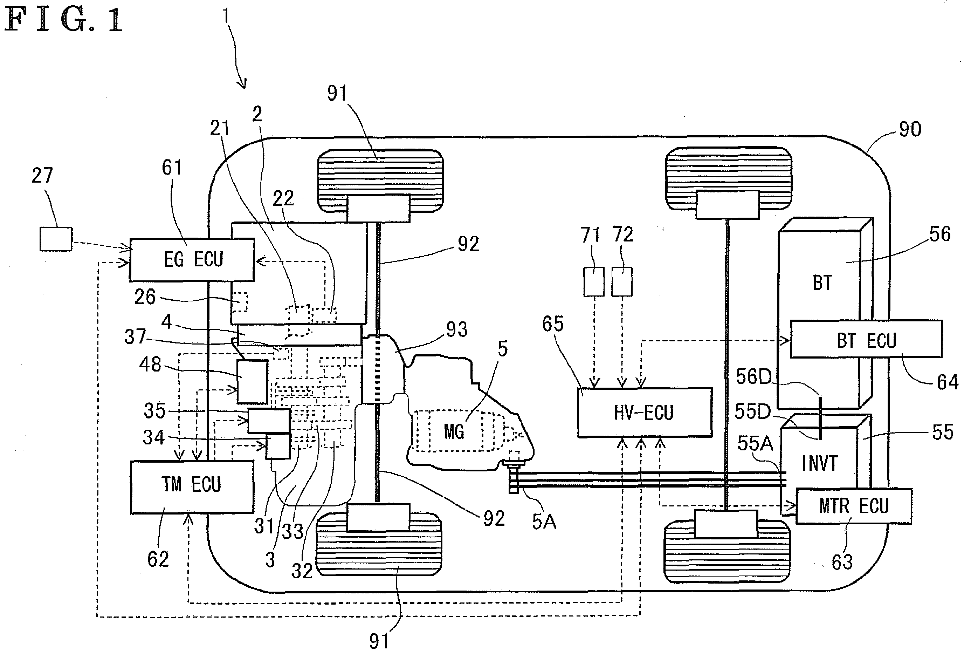

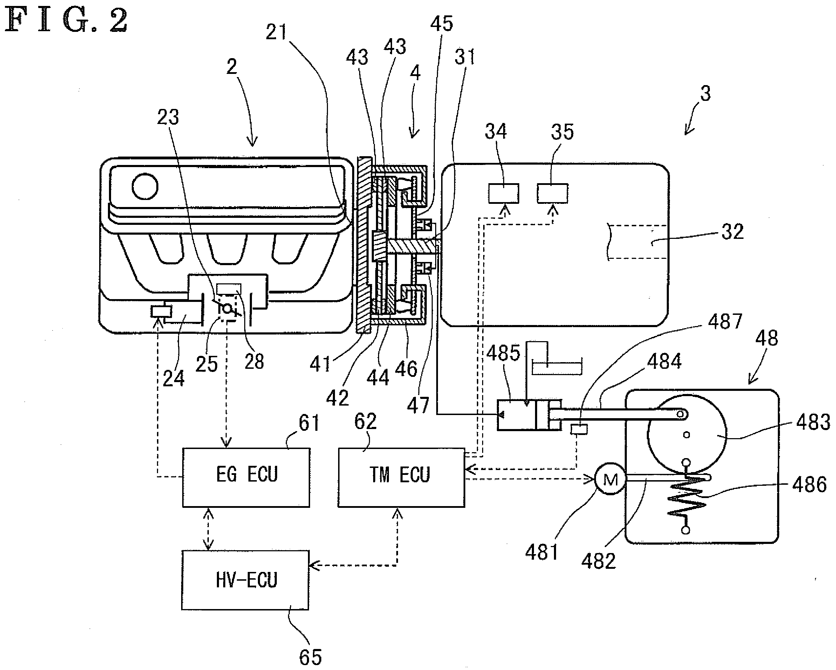

An embodiment of a gear shift control device for a hybrid vehicle drive system will be explained with reference to Figs. 1 to 8 as follows. As shown in Fig. 1, a hybrid vehicle drive system 1 is provided with an engine 2 and a motor generator (i.e., serving as a motor) 5 that serve as drive sources. In the hybrid vehicle drive system 1, the engine 2 and the motor generator 5 are mounted to a front portion of a chassis 90 so as to be in parallel with each other. The hybrid vehicle drive system 1 is configured so that driving front wheels (i.e., serving as driving wheels) 91 are driven by one of the engine 2 and the motor generator 5 or by both the engine 2 and the motor generator 5. The hybrid vehicle drive system 1 is further provided with an automatic transmission 3 and a clutch 4. In Figs. 1 and 2, arrows with dotted lines connecting elements show control flows.

As illustrated in Fig. 1, the engine 2 is transversely arranged at a forward side relative to an axle 92 of the driving front wheels 91 on the chassis 90. The engine 2, the clutch 4, and the automatic transmission 3 are arranged in the mentioned order in a vehicle width direction. The engine 2, the clutch 4, and the automatic transmission 3 share a common rotational axis within a range from an output shaft 21 of the engine 2 to an input shaft 31 of the automatic transmission 3. An engine rotation speed sensor 22, which is a non-contact sensor, for detecting a rotation speed of the output shaft 21 is provided in the vicinity of the output shaft 21 of the engine 2. Further, as schematically shown in Fig. 2, the engine 2 is provided with a throttle valve 23 for regulating or adjusting an air intake amount, and an injector 28 for regulating or adjusting a fuel supply amount in association with the air intake amount. Further, an actuator 24 for throttle control for regulating or adjusting a throttle opening degree Sit of the throttle valve 23 and a throttle position sensor 25 for detecting the throttle opening degree Sit are arranged at the engine 2. The throttle valve 23 and the injector 28 serve as an output control mechanism for controlling an engine torque Te outputted from the output shaft 21 of the engine 2.

The clutch 4 corresponds to a dry-type single plate friction clutch which is hydraulically operated. The clutch 4 includes a flywheel 41, a clutch disc 42, a pressure plate 44, a diaphragm spring 45, a clutch cover 46, a hydraulic direct cylinder (concentric slave cylinder) 47, and a clutch actuator (i.e., serving as a clutch actuation mechanism) 48. As illustrated in Fig. 2, the flywheel 41 is made of, for example, cast iron and is formed in a thick disc shape having a mass for maintaining inertia. The flywheel 41 is coaxially fixed to the output shaft 21 of the engine 2. The clutch cover 46 having a substantially cylindrical shape is provided to extend in an axial direction from an outer periphery portion of the flywheel 41 at a side opposite to a side which faces the engine 2. The clutch disc 42 having a substantially disc shape is positioned adjoining the flywheel 41 inside the clutch cover 46. A center portion of the clutch disc 42 is spline-fitted to the input shaft 31 of the automatic transmission 3 so that the clutch disc 42 integrally rotates with the input shaft 31. Clutch facings 43 are secured to opposing surfaces of the clutch disc 42 so as to be positioned close to an outer periphery thereof.

The substantially annular shaped pressure plate 44 is provided adjoining the clutch disc 42 so as to move in the axial direction. The diaphragm spring 45 and the hydraulic direct cylinder 47 are configured to drive the pressure plate 44 (i.e., the diaphragm spring 45 and the hydraulic direct cylinder 47 are provided as members for driving the pressure plate 44). Further, the clutch actuator 48 for operating the hydraulic direct cylinder 47 is provided to serve as the clutch actuation mechanism. The clutch actuator 48 includes a direct current motor 481, a speed reduction mechanism 482 including a worm gear, an output wheel 483, an output rod 484, a master cylinder 485, an assist spring 486, and a stroke sensor 487.

Upon a rotational actuation of the direct current motor 481 of the clutch actuator 48, the output wheel 483 is rotated via the speed reduction mechanism 482 to move the output rod 484 forward (leftward in Fig. 2) or rearward (rightward in Fig. 2). Then, a hydraulic pressure is generated at the master cylinder 485 and the generated hydraulic pressure is transmitted to the hydraulic direct cylinder 47; thereby, the hydraulic direct cylinder 47 is actuated. Thus, the pressure plate 44 is moved in the axial direction via the diaphragm spring 45. The pressure plate 44 presses the clutch disc 42 in a state where the clutch disc 42 is sandwiched between the pressure plate 44 and the flywheel 41, thereby changing a pressure load of the clutch facings 43 of the clutch disc 42 slidably rotating relative to the flywheel 41. The assist spring 486 assists the output rod 484 to move forward (leftward in Fig. 2). The stroke sensor 487 detects an operation amount Ma of the output rod 484.

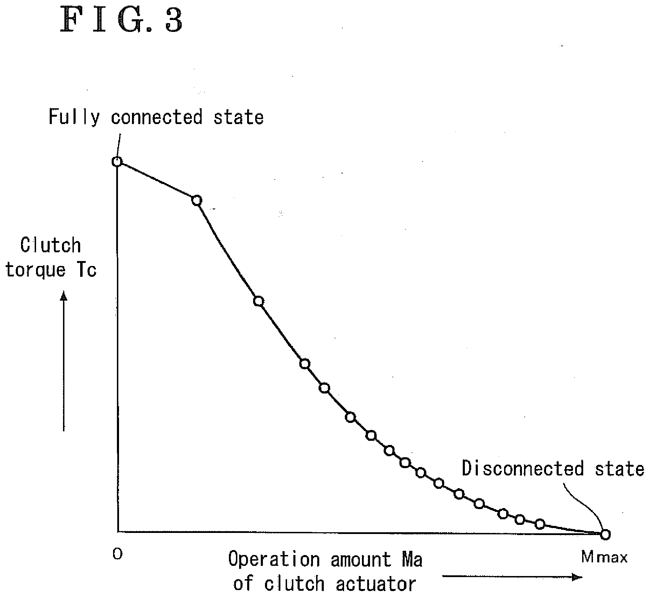

Thus, the clutch 4 is configured to be switched between a connected state where the output shaft 21 of the engine 2 and the input shaft 31 of the automatic transmission 3 are rotatably connected to one another so that a clutch torque Tc is adjustable, and a disconnected state where the output shaft 21 of the engine 2 and the input shaft 31 of the automatic transmission 3 are disconnected from one another. Fig. 3 shows torque transmission characteristics of the clutch 4. A horizontal axis in Fig. 3 shows the operation amount Ma of the output rod 484 of the clutch actuator 48, and a vertical axis in Fig. 3 shows the transmissible clutch torque Tc. The hydraulic direct cylinder 47 is moved in an axial direction of the input shaft 31 depending on the operation amount Ma of the output rod 484 of the clutch actuator 48; thereby, a pressing force of the diaphragm spring 45 pressing the pressure plate 44 toward the clutch disc 42 is adjusted. Clutch torque is generated by the pressing force; therefore, the transmissible clutch torque Tc may be calculated from the operation amount Ma of the output rod 484 of the clutch actuator 48. A normally connected type clutch, which is assumed to be in a fully connected state where the clutch torque Tc is maximized when the operation amount Ma is zero (i.e., operation amount Ma = 0), is applied as the clutch 4. The clutch 4 is configured so that the transmissible clutch torque Tc is reduced in accordance with an increase of the operation amount Ma in a condition where the clutch 4 is in a half-connected state. In addition, the clutch 4 is configured to be in the disconnected state when the operation amount Ma is assumed to be the maximum (i.e., operation amount Ma = Mmax). In addition, the clutch torque Tc greater than an engine torque is not transmitted to the input shaft 31 of the automatic transmission 3. Accordingly, an upper limit of the clutch torque Tc used in a first computing equation that will be described below is equivalent to the engine torque. Moreover, in a condition where the engine 2 is in a stopped state, the clutch torque is zero; therefore, the clutch torque Tc is not determined from Fig. 3.

An automated manual transmission (AMT), which is structured to be automated by adding actuators (a shift actuator and a select actuator) 34, 35 to a manual transmission for selectively engaging one of plural gear sets of a gear train 33 by a manual operation of a shift lever by a driver, is applied as the automatic transmission 3 (hereinafter, the automatic transmission 3 will be referred to as an automated manual transmission 3). As shown with dotted lines in Fig. 1, the automated manual transmission 3 includes a parallel-axes gear meshing type structure which includes the gear train 33 with five forward speed ratios and one reverse speed ratio provided between the input shaft 31 and the output shaft 32 which are arranged in parallel to one another. The input shaft 31 is actuated to rotate by an engine torque outputted from the engine 2 via the clutch 4. A rotation speed sensor 37 for detecting an input rotation speed of the input shaft 31 is provided in the vicinity of the input shaft 31. The output shaft 32 is meshed with an input side of a differential mechanism 93 positioned at an intermediate portion in the vehicle width direction, and is rotatably connected to the driving front wheels 91 via the differential mechanism 93.

As shown in Fig. 2, the automated manual transmission 3 includes the shift actuator 34 and the select actuator 35 which serve as a gear switching mechanism for selectively engaging one of the plural gear sets of the gear train 33. A known method is applied for actuating the shift actuator 34 and the select actuator 35.

A motor functioning only as an electric motor may be applied as the motor generator 5. In the embodiment, a motor functioning as an electric generator is applied as the motor generator 5. As shown in Fig. 1, the motor generator (i.e., also referred to as MG) 5 is positioned at a rearward relative to the axle 92 of the driving front wheels 91 on the chassis 90. A three-phase alternating current electrical rotating machine which is generally used for a hybrid vehicle (vehicle) is applied as the motor generator 5. An output shaft of the motor generator 5 is rotatably connected to the input side of the differential mechanism 93 via a speed reduction mechanism. Accordingly, the output shaft of the motor generator 5 is rotatably connected to the output shaft 32 of the automated manual transmission 3 and the driving front wheels 91.

An inverter (i.e., also referred to as INVT) 55 and a battery (i.e., also referred to as BT) 56 are mounted to a rear portion of the chassis 90 for actuating the motor generator 5. Application of the weights is balanced at front and rear of the chassis 90 by mounting the engine 2 and the automated manual transmission 3 to the front portion of the chassis 90 and by mounting the battery 56 and the inverter 55 to the rear portion of the chassis 90. The inverter 55 includes an alternating current terminal 55A and a direct current terminal 55D which serve as input and output terminals. The alternating current terminal 55A is connected to an electric power source terminal 5A of the motor generator 5 and the direct current terminal 55D is connected to a terminal 56D of the battery 56. The inverter 55 includes a direct current-alternating current converting function for converting a direct current electric power, which is outputted from the battery 56, into an alternating current electric power having variable frequency, to supply the alternating current electric power to the motor generator 5, and an alternating current-direct current converting function for converting the alternating current electric power generated at the motor generator 5 to the direct current electric power to charge the battery 56. In addition, the battery 56 may be provided exclusive for driving the hybrid vehicle, or may be shared with other use.

When the alternating current electric power is supplied to the motor generator 5, the motor generator 5 serves as the electric motor to generate a motor torque Tm which can be added to the engine torque Te to thereby drive the driving front wheels 91. When being actuated by a power generation toque which corresponds to a part of the engine torque Te, the motor generator 5 serves as the electric generator to charge the battery 56.

In order to control portions of the hybrid vehicle drive system 1, electronic control units (ECUs) are provided, respectively. In other words, as shown in Fig. 1, the hybrid vehicle drive system 1 includes an engine electronic control unit (engine ECU, also referred to as EG ECU) 61, a transmission electronic control unit (transmission ECU, also referred to as TM ECU) 62, a motor electronic control unit (motor ECU, referred to as MTR ECU) 63, and a battery electronic control unit (battery ECU, also referred to as BT ECU) 64. The hybrid vehicle drive system 1 further includes a hybrid vehicle electronic control unit (HV-ECU) 65 for controlling the hybrid vehicle drive system 1 as a whole. Each of the engine ECU 61, the transmission ECU 62, the motor ECU 63, and the battery ECU 64 for controlling each of assigned portions is connected to the HV-ECU 65 to exchange the bilaterally necessary information, and is managed and controlled by the HV-ECU 65. Each of the engine ECU 61, the transmission ECU 62, the motor ECU 63, the battery ECU 64, and the HV-ECU 65 includes a CPU portion for executing an arithmetic processing, a memory portion, for example, a ROM and a RAM for storing a program and various maps, and an input-output portion for exchanging the information.

The engine ECU 61 actuates a starter 26 (see Fig. 1) in response to an operation of an ignition switch 27 (see Fig. 1) to start the engine 2. Further, the engine ECU 61 obtains a signal of an engine rotation speed Ne of the output shaft 21 from the engine rotation speed sensor 22 and obtains a signal of a throttle opening degree Sit from the throttle position sensor 25. Then, the engine ECU 61 commands the actuator 24 for throttle control to open and close the throttle valve 23 while monitoring the engine rotation speed Ne of the output shaft 21. In addition, the engine ECU 61 controls the injector 28 to thereby control the engine torque Te and the engine rotation speed Ne. According to the embodiment, the engine rotation speed Ne is controlled not just by an operation amount of an accelerator pedal (acceleration means) applied by a driver and is controlled by a command from the HV-ECU 65 prior to the operation of the accelerator pedal by the driver.

The transmission ECU 62 executes a gear shift control by controlling the clutch 4 and the automated manual transmission 3 in association with each other. The transmission ECU 62 actuates the direct current motor 481 of the clutch actuator 48 to control a transmissible clutch torque Tc, and obtains a signal of an operation amount Ma of the output rod 484 from the stroke sensor 487 to recognize or acquire the clutch torque Tc at the time. In addition, the transmission ECU 62 obtains an input rotation speed Ni from the rotation speed sensor 37 of the automated manual transmission 3, and actuates the shift actuator 34 and the select actuator 35 to selectively engage one of the gear sets of the gear train 33 to control a change of gear stages. Details of the gear shift control of the transmission ECU62 will be described below in association with an operation of the gear shift control device.

The motor ECU 63 controls the inverter 55 to control an operation of the motor generator 5. For example, the motor ECU 63 controls the inverter 55 so that the alternating current electric power is supplied from the inverter 55 to the motor generator 5; thereby, the motor generator 5 functions as the electric motor to generate the motor torque Tm. The frequency of the alternating current electric power needs to be controlled to be a value matching to a rotation speed of the output shaft 32 of the automated manual transmission 3. Further, for example, a virtual value or effective value of the alternating current electric power is variably controlled by a pulse width modulation control (PWM control); thereby, the level of the motor torque Tm may be regulated or adjusted. Furthermore, the motor ECU 63 is configured to control the inverter 55 to receive the alternating current electric power generated at the motor generator 5, thereby allowing the motor generator 5 to function as the electric generator.

The battery ECU 64 manages a state of charge SOC of the battery 56. The information of the state of charge SOC is sent to the HV-ECU 65 and is referred to in various controls. In a case where the state of charge SOC declines or excessively increases, a control for swiftly regaining a favorable state of the state of charge SOC is performed.

The HV-ECU 65 shares the information necessary among the engine ECU 61, the transmission ECU 62, the motor ECU 63, and the battery ECU 64 for controlling each of assigned portions to control the hybrid vehicle drive system 1 as a whole. The HV-ECU 65 obtains the information of an accelerator pedal position from an accelerator pedal position sensor 71, and obtains the information of a vehicle speed from a vehicle speed sensor 72. The accelerator pedal position sensor 71 is a sensor for detecting an operation amount of the accelerator pedal (acceleration means) operated by the driver, that is, the accelerator pedal position. A level of drive torque required for the driving front wheels 91 to bring the hybrid vehicle in a moving condition is determined on the basis of the accelerator pedal position. In a case where torque actually generated is deficient relative to the level of the drive torque required for the driving front wheels 91, a driver who is not performing the gear shift operation by himself/herself feels that a loss of acceleration feel is generated during a gear shift operation. The loss of acceleration feel is not raised as a problem with a drive system including manually-operated clutch and transmission, because a driver performs a gear shift operation by himself / herself.

The gear shift control device according to the embodiment includes a torque indication means, a gear shift control means, and a motor torque computing means. The torque indication means, the gear shift control means, and the motor torque computing means are realized by software of the engine ECU 61, the transmission ECU 62, the motor ECU 63, the battery ECU 64, and the HV-ECU 65, and are executed by a cooperative operation of the engine ECU 61, the transmission ECU 62, the motor ECU 63, the battery ECU 64, and the HV-ECU 65 with one another.

The torque indication means is a means for indicating the aforementioned drive torque required for the driving front wheels 91 as a driver request torque Tdrv which is converted into an engine torque Te. Because the level of the drive torque is changeable, for example, depending on a gear ratio between the input shaft 31 and the output shaft 32 of the automated manual transmission 3, the drive torque for the driving front wheels 91 is computed on the basis of the output shaft 21 of the engine 2 and is indicated as the driver request torque Tdrv.

The gear shift control means is a means which is actuated when a gear shift condition is fulfilled. Upon the fulfillment of the gear shift condition, first, the gear shift control means regulates the throttle valve 23 and the injector 28 to reduce the engine torque Te and actuates the motor generator 5 as the electric motor to generate the motor torque Tm. Second, the gear shift control means operates the clutch actuator 48 to bring the clutch 4 in the disconnected state. Third, the gear shift control means changes the selections of the gear sets of the gear train 33 (i.e., changing gears) by the shift actuator 34 and the select actuator 35. Thereafter, fourth, the gear shift control means operates the clutch actuator 48 to return the clutch 4 to the connected state from the disconnected state. Fifth, the gear shift control means reduces the motor torque Tm and regulates the throttle valve 23 and the injector 28 to increase the engine torque Te.

The motor torque computing means is an upshift operation to increase a gear ratio by means of the shift actuator 34 and the select actuator 35 of the automated manual transmission 3. The motor torque computing means is actuated after the selections of the gear sets of the gear train 33 (i.e., changing gears) is completed. The motor torque Tm obtained by the motor torque computing means is applied as a target value to reduce the motor torque Tm in the aforementioned fifth control of the gear shift control means.

The motor torque computing means utilizes a computing equation for obtaining a motor torque Tm (=Tm1 or Tm2), depending on a rotational difference ΔN (=Ne - Ni) that is obtained by subtracting an input rotation speed Ni (a rotation speed) of the input shaft 31 of the automated manual transmission 3 from an engine rotation speed Ne (a rotation speed) of the output shaft 21 of the engine 2. That is, as indicated in the first computing equation, the motor torque Tm1 corresponding to a first subtraction value is obtained by subtracting a clutch torque Tc from a driver request torque Tdrv until the rotational difference ΔN reaches a second predetermined value N2 while gradually decreasing.

$$\text{Motor torque Tm1} = \text{Tdrv} - \text{Tc} \quad \text{(First computing equation)}$$

In addition, in a case where the rotational difference ΔN is decreased to be equal to or lower than the second predetermine value N2, a motor torque Tm2 corresponding to a second subtraction value is obtained by subtracting an engine torque estimate value TeX (an estimate value TeX of the engine torque Te) from the driver request torque Tdrv as indicated in a second computing equation.

$$\text{Motor torque Tm2} = \text{Tdrv} - \text{TeX} \quad \text{(Second computing equation)}$$

Here, the engine torque estimate value TeX is a value estimated by including a time delay in torque control in a torque characteristic map of the engine 2. For example, at a certain point in time, an engine torque indication value TeY that is lower than an engine torque Te at the certain point in time is indicated to decrease a throttle opening angle to reduce the engine torque Te. At this time, a time delay in torque control relative to the indication of the engine torque indication value TeY occurs in an operation of the throttle valve 23. Therefore, at a subsequent certain point in time, a throttle opening angle in which the time delay is taken into account, and an engine rotation speed Ne actually measured are applied to the torque characteristic map; thereby, the engine torque estimate value TeX of the engine torque Te may be estimated. In general, the engine torque estimate value TeX varies with the time delay in torque control relative to the indication of the engine torque indication value TeY.

In addition, in a case where the rotational difference ΔN increases and decreases while not monotonically decreasing, the motor torque Tm (=Tm1 or Tm2) is utilized accordingly as below. In other words, for example, the rotational difference ΔN decreased to be equal to or lower than the second predetermined value N2 varies to exceed the second predetermined value N2 and does not exceed a first predetermined value N1 (>N2). In such case, the motor torque Tm2 corresponding to the second subtraction value is continuously utilized. Further, for example, in a case where the rotational difference ΔN decreased again exceeds the first predetermined value N1, the motor torque Tm1 corresponding to the first subtraction value is utilized. In addition, the first predetermined value N1 and the second predetermined value N2 may be determined accordingly in consideration of the configuration of the hybrid vehicle drive system 1.

The aforementioned motor torque Tm (=Tm1 or Tm2) is a torque value at the output shaft 21 of the engine 2. Therefore, a motor torque Tgm at the output shaft of the motor generator 5, which may be required in an actual torque control, is obtained from the following third computing equation.

$$\text{Motor torque Tgm} = \text{Tm} \times \text{DEFe} / \text{DEFm} \quad \text{(Third computing equation)}$$

Here, an engine speed reduction ratio DEFe in the third computing equation is a speed reduction ratio between the output shaft 21 of the engine 2 and the driving front wheels 91. In the embodiment, the engine speed reduction ratio DEFe is a value obtained by multiplying a speed reduction ratio of the differential mechanism 93 by a gear change ratio of the gear train 33 of the automated manual transmission 3, which is in the engaged state. Further, a motor speed reduction ratio DEFm in the third computing equation is a speed reduction ratio between the output shaft of the motor generator 5 and the driving front wheels 91. In the embodiment, the motor speed reduction ratio DEFm is a value obtained by multiplying the speed reduction ratio of the differential mechanism 93 by a speed reduction ratio of the speed reduction mechanism of the motor generator 5.

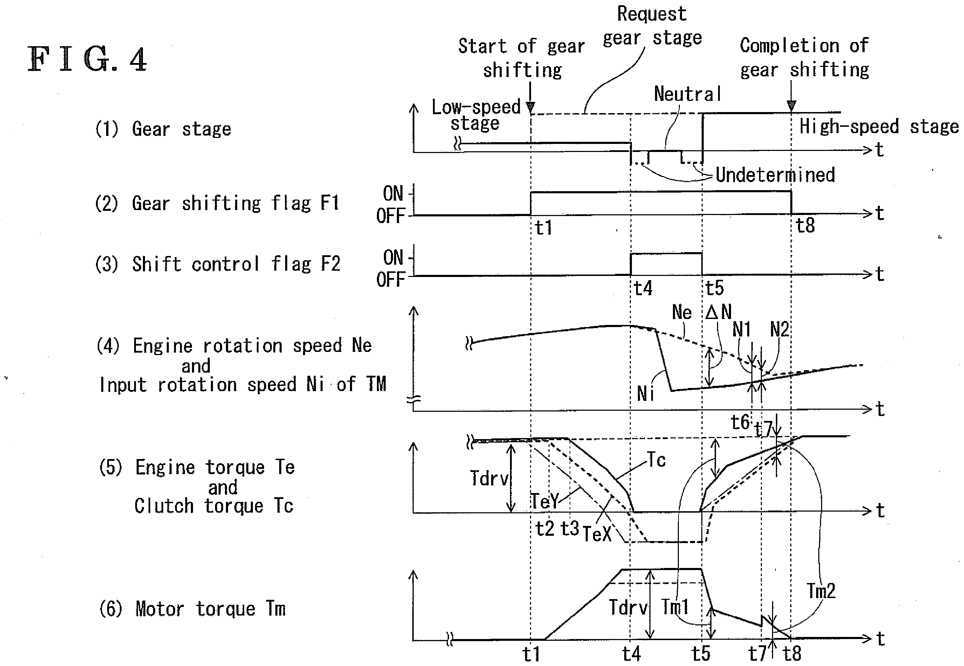

Next, an operation of the aforementioned gear shift control device will be described as follows. Fig. 4 is a timeline chart showing a control operation of the gear shift control device according to the embodiment. In Fig. 4, a common time is indicated on a horizontal axis. In the mentioned order from the upper side of Fig. 4, graphs show (1) Gear stage, (2) Flag F1 during gear shifting (which will be referred to as a gear shifting flag F1), (3) Shift control flag F2, (4) Engine rotation speed Ne and Input rotation speed Ni of the automated manual transmission 3 (i.e., referred to as TM), (5) Engine torque Te and Clutch torque Tc, and (6) Motor torque Tm.

The gear stage in (1) of Fig. 4 shows a gear stage with which the gear sets of the gear train 33 of the automated manual transmission 3 are engaged. Further, in (1) of Fig. 4, an actual gear stage is indicated by a solid line and a request gear stage requested by a driver is indicated by a dashed line. As illustrated in Fig. 4, an upshift operation, i.e., a gear shift operation from a low-speed stage (for example, a 1st speed) to a high-speed stage (for example, a 2nd speed) is an object to be controlled by the embodiment. The gear shifting flag F1 in (2) of Fig. 4 is a flag to indicate ON only during a period of time while the gear shift control is in execution. Further, the shift control flag F2 in (3) of Fig. 4 is a flag to indicate ON only during a period of time while changing gears of the gear train 33 of the automated manual transmission 3 is in execution. The information of the request gear stage requested by the driver, the gear shifting flag F1, and the shift control flag F2 is communicated and transmitted from the transmission ECU 62 to the HV-ECU 65.

In Fig. 4, the hybrid vehicle is initially in a moving mode in a state where the gear train 33 of the automated manual transmission 3 is at the low-speed stage and an engine torque Te conforms to a driver request torque Tdrv. Thereafter, when an engine rotation speed Ne gradually increases and the gear shift condition is fulfilled at time t1, the gear shift control starts. The driver request torque Tdrv is substantially uniform during the gear shift operation. Firstly, at time t1, the transmission ECU 62 sets the high-speed stage to the request gear stage and sets the gear shifting flag F1 to ON. Then, the HV-ECU 65 receives a change from OFF to ON of the gear shifting flag F1 and commands the engine ECU 61 to reduce an engine torque indication value TeY. Therefore, the engine ECU 61 controls the throttle valve 23 and the injector 28 to reduce the engine torque Te.

Second, at time t2 when the engine torque Te is estimated to actually start decreasing with the time delay in torque control, i.e., at time t2 when the engine torque estimate value TeX starts decreasing, the HV-ECU 65 commands the motor ECU 63 to start the motor generator 5 as the electric motor. Thereafter, the HV-ECU 65 commands the motor ECU 63 to generate a motor torque Tm equivalent to a decrease in the engine torque estimate value TeX. In response to the command from the HV-ECU 65, the motor ECU 63 controls the motor generator 5. Third, the transmission ECU 62 controls the clutch actuator 48 to gradually deteriorate the connection of the clutch 4 within a range where the clutch torque Tc does not become lower than the engine torque estimate value TeX.

Then, at time t4, the engine torque estimate value TeX reaches substantially zero and the motor torque Tm is substantially equivalent to the driver request torque Tdrv; therefore, the drive torque for driving the driving front wheels 91 is shifted from the engine torque Te to the motor torque Tm. At this time, the HV-ECU 65 transmits the information that the drive torque for driving the driving front wheels 91 is shifted from the engine torque Te to the motor torque Tm, to the transmission ECU 62. In addition, for example, in a case where the driver request torque Tdrv is greater than a rated torque of the motor torque Tm, the motor torque Tm is controlled within the rated torque (within a level indicated by a dashed line in (6) of Fig. 4). In such case, the transmission ECU 62 confirms that the clutch torque Tc is substantially zero, that is, the clutch 4 is substantially in the disconnected state. Thereafter, the transmission ECU 62 controls the shift actuator 34 and the select actuator 35 to start changing gears of the gear train 33 and sets the shift control flag F2 to ON. In accordance with changing gears of the gear train 33, the gear is shifted from the low-speed stage via a neutral stage to the high-speed stage. Then, when the gear shift operation is completed at time t5, the transmission ECU 62 returns the shift control flag F2 to OFF from ON. In addition, during a period from time t4 to time t5, the engine torque estimate value TeX becomes a negative value and an engine braking force acts; therefore, the engine rotation speed Ne is reduced.

After time t5, the transmission ECU 62 restores the connected state of the clutch 4. In addition, the HV-ECU 65 that has received a change of the shift control flag F2 from ON to OFF at time t5 commands the engine ECU 61 to increase the engine torque indication value TeY. Therefore, the engine ECU 61 controls the throttle valve 23 and the injector 28 to increase the engine torque Te. Further, the HV-ECU 65 commands the motor ECU 63 to reduce the motor torque Tm. At this time, the motor torque computing means functions to compute the motor torque Tm utilized when the motor ECU 63 controls the motor generator 5.

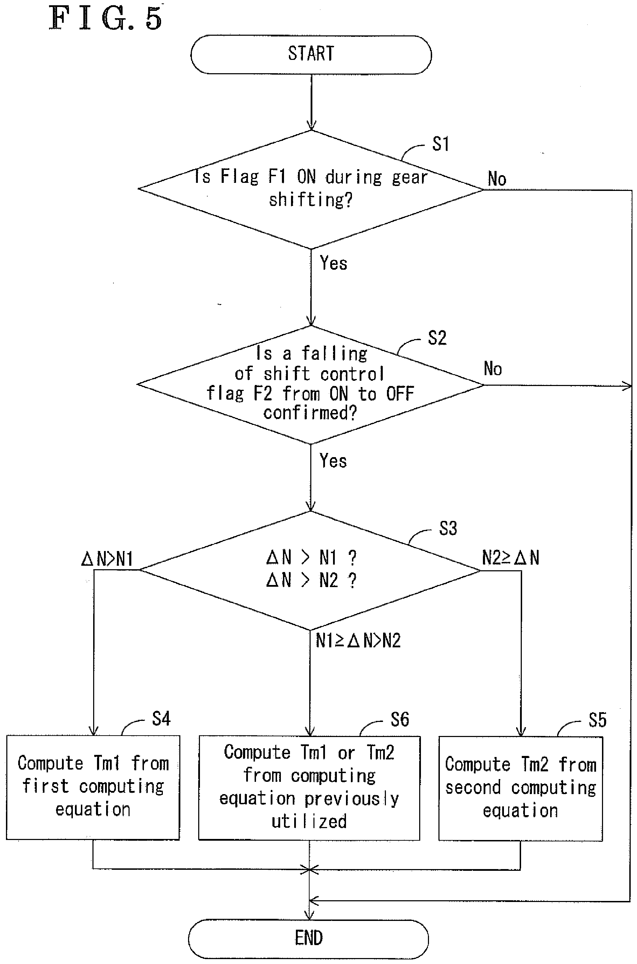

Fig. 5 is a flowchart for describing an arithmetic processing of the motor torque computing means. The arithmetic processing in Fig. 5 being conducted at a fixed time interval has a function to compute the motor torque Tm (=Tm1 or Tm2) utilized in the gear shift control. In Step 1 (S1) in Fig. 5, a state of the gear shifting flag F1 is referred to. In a case where the state of the gear shifting flag F1 is ON in S1, the arithmetic processing shifts to Step 2 (S2). Step 1, Step 2, Step 3, and the like will be hereinafter referred to as S1, S2, S3, and the like. Meanwhile, in a case where the state of the gear shifting flag F1 is OFF in S1, the arithmetic processing immediately ends. In S2, a history of the shift control flag F2 is referred to. In a case where time has elapsed after a falling of the shift control flag F2 from ON to OFF is confirmed in S2, the arithmetic processing shifts to S3. Otherwise, the arithmetic processing immediately ends. S1 and S2 are steps for confirming that the control operation of the gear shift control device is between time t5 and time t8 that are shown in Fig. 4.

Next, in S3, the rotational difference ∆N obtained by subtracting the input rotation speed Ni of the input shaft 31 of the automated manual transmission 3 from the engine rotation speed Ne of the output shaft 21 of the engine 2 is compared with the first predetermined value N1 and the second predetermined value N2 (<N1); thereafter, the arithmetic processing shifts to one of Steps 4 to 6 (S4 to S6) from S3. In S4 where the rotational difference ∆N is greater than the first predetermined value N1 (∆N>N1), the motor torque Tm1 is computed from the aforementioned first computing equation. In S5 where the rotational difference ∆N is equal to or lower than the second predetermine value N2 (N2≥∆N), the motor torque Tm2 is computed from the aforementioned second computing equation. In addition, in S6 where the rotational difference ∆N is equal to or lower than the first predetermined value N1 and is greater than the second predetermined value N2 (N1≥∆N>N2), the motor torque Tm1 or Tm2 is computed from one of the first and second computing equations, which is used in a previous arithmetic processing.

Referring back to Fig. 4, the rotational difference ∆N gradually decreases after time t5. Then, the rotational difference ∆N is equivalent to the second predetermined value N2 at time t7, thereafter further decreasing gradually. Accordingly, during a period from time t5 to time t7, the motor ECU 63 determines the motor torque Tm1 computed from the first computing equation, as a target value for motor torque control. In addition, after time t7, the motor ECU 63 determines the motor torque Tm2 computed from the second computing equation, as a target value for motor torque control. The motor ECU 63 controls the motor generator 5 in a manner to utilize the third computing equation to convert the motor torque Tm (=Tm1 or Tm2) to the motor torque Tgm at the output shaft of the motor generator 5.

Consequently, after time t5, the motor torque Tm gradually decreases so as to compensate an increase in the clutch torque Tc or the engine torque estimate value TeX; therefore, the drive torque for driving the driving front wheels 91 is gradually shifted from the motor torque Tm to the engine torque Te. Then, at time t8, the engine torque estimate value TeX is substantially equivalent to the driver request torque Tdrv. In addition, the clutch 4 is brought in a substantially fully connected state and the motor torque Tm becomes substantially zero. Thus, the gear shift control is completed and the gear shifting flag F1 is returned to OFF from ON. Afterward, the clutch 4 is maintained in the fully connected state and the engine rotation speed Ne and the input rotation speed Ni increase together; therefore, the hybrid vehicle is accelerated.

In addition, at time t6, the rotational difference ∆N becomes lower than the first predetermined value N1. At this time, the first computing equation and the motor torque Tm1 are not shifted to the second computing equation and the motor torque Tm2. The first predetermined value N1 functions to restrict frequent shifts of the motor torque Tm between the motor torque Tm1 and the motor torque Tm2 in a case where the rotational difference ∆N repeatedly varies (increases and decreases). In other words, for example, the rotational difference ∆N decreased varies to exceed the second predetermined value N2 and does not exceed the first predetermined value N1. In such case, the motor torque Tm2 is continuously utilized. In addition, in a case where the rotational difference ∆N decreased again exceeds the first predetermined value N1, the motor torque Tm1 is utilized. Thus, hysteresis is generated in rotation determination by comparing the rotational difference ∆N with the first predetermined value N1 and the second predetermined value N2, thereby determining which to use the first subtraction value or the second subtraction value. Accordingly, for example, even in a case where the rotational difference ∆N repeatedly increases and decreases near a boundary area (such variation of the rotational difference ∆N is called hunting), the motor torque Tm may be restricted from been frequently shifted between the motor torque Tm1 (first subtraction value) and the motor torque Tm2 (second subtraction value). As a result, the gear shift control device may stably operate.

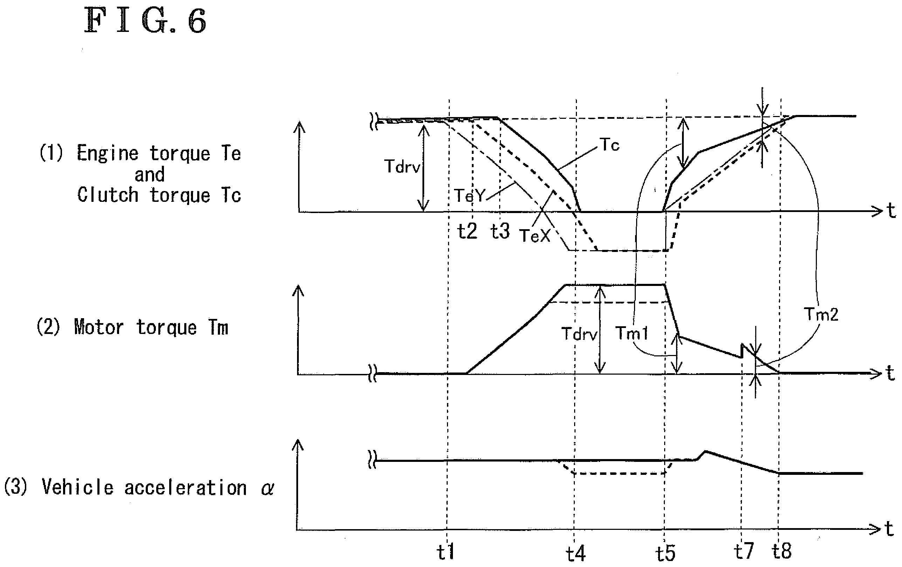

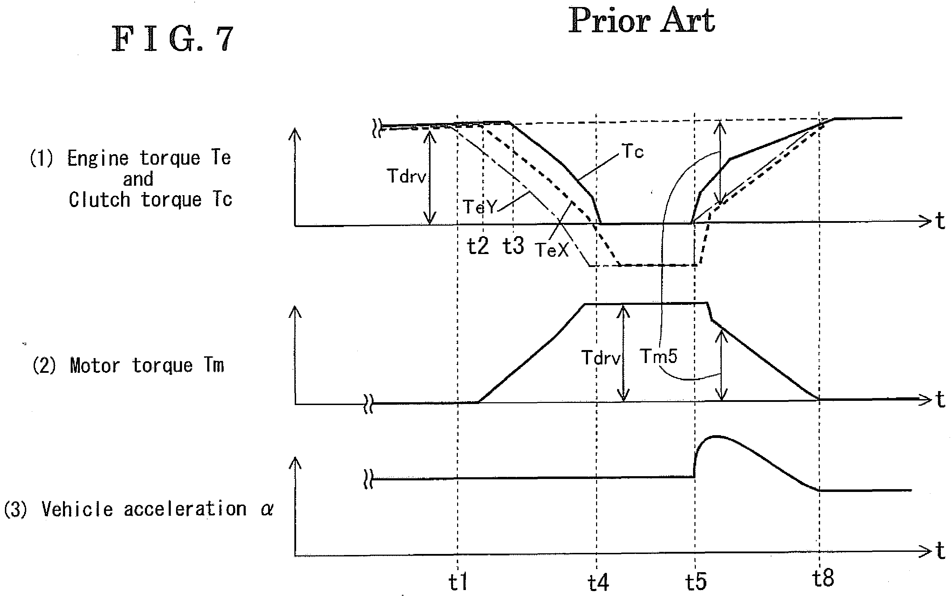

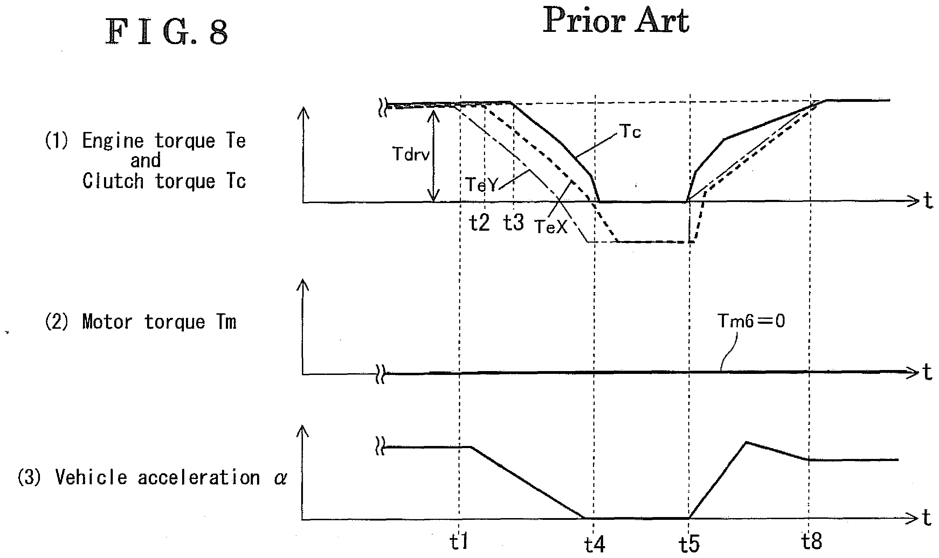

Next, a function of the gear shift control device according to the embodiment will be described as follows in comparison with first and second known gear shift control devices and with reference to Figs. 6 to 8. Fig. 6 is an explanatory chart showing the function of the gear shift control device according to the embodiment. Fig. 7 is an explanatory chart showing a function of the first known gear shift control device in which a motor torque is generated only on the basis of an engine torque estimate value TeX after changing gears of the gear train 33 is completed. Further, Fig. 8 is an explanatory chart showing a function of the second known gear shift control device in which a motor torque is not generated during a gear shift operation. In each of Figs. 6 to 8, a horizontal axis indicates a common time t. In the mentioned order from the upper side of each of Figs. 6 to 8, graphs show (1) Engine torque Te and Clutch torque Tc, (2) Motor torque Tm, and (3) Vehicle acceleration α. In addition, (1) and (2) of Fig. 6 are identical to (5) and (6) of Fig. 4.

In the embodiment illustrated in Fig. 6, during a period from time t5 to time t7, the rotational difference ∆N is large (see (4) of Fig. 4) and the engine torque Te equivalent to the clutch torque Tc determined depending on the connected state of the clutch 4 is transmitted by the clutch 4 to the input shaft 31 of the automated manual transmission 3. Therefore, in a case where the clutch torque Tc is utilized in order to estimate a drive torque to be transmitted to the driving front wheels 91, the estimated drive torque is further precise compared to a case where the engine torque estimate value TeX is utilized. On the other hand, during a period from time 7 to time 8, the rotational difference ∆N decreases (see (4) of Fig. 4) and the connected state of the clutch 4 is enhanced; therefore, the clutch torque Tc indicates an amount of a transmissible torque and does not indicate an amount of the drive torque actually transmitted to the driving front wheels 91. Therefore, the engine torque estimate value TeX is utilized in order to estimate the drive torque actually transmitted to the driving front wheels 91; thereby, the estimated drive torque is further precise compared to a case where the clutch torque Tc is utilized. Thus, throughout a period (from time t5 to time t8) of the gear shift operation after changing gears of the gear train 33 is completed, the precision of the drive torque actually transmitted to the driving front wheels 91 increases and thus may be substantially equivalent to the driver request torque Tdrv.

As a result, as indicated by a solid line in (3) of Fig. 6, throughout a period (from time t1 to time t8) of the gear shift operation, the stable vehicle acceleration $\alpha$ may be obtained. Accordingly, a driver has an acceleration feel matching to an operation amount of the accelerator pedal applied by the driver and does not feel that a loss of acceleration feel is generated during the gear shift operation. Further, throughout the period (from time t1 to time t8) of the gear shift operation, the hybrid vehicle is smoothly accelerated and a shift shock is not generated. In addition, in a case where the driver request torque Tdrv is greater than a rated torque of the motor torque Tm and the motor torque Tm is controlled within the rated torque, the vehicle acceleration $\alpha$ slightly decreases as indicated by a dashed line in (3) of Fig. 6. At this time, although the loss of acceleration feel is generated during the gear shift operation, the loss is slight. Further, the vehicle acceleration $\alpha$ does not suddenly vary and a shift shock is not generated.

Meanwhile, according to the first known gear shift control device shown in Fig. 7, in a case where the drive torque for the driving front wheels 91 is controlled after changing gears of a gear train is completed, the engine torque estimate value TeX is utilized and a clutch torque Tc is not utilized throughout a period from time t5 to time t8. The engine torque estimate value TeX is generally estimated from a torque characteristic map indicating static torque characteristics in a state where a vehicle is in a constant moving condition. In a case where a rotation speed of an engine varies, for example, during the gear shift operation, the engine torque estimate value TeX is not precisely estimated from the torque characteristic map. For example, transmission of inertia torque accumulated on the flywheel 41 of the clutch 4 is not taken into account in the torque characteristic map; therefore, the engine torque estimate value TeX may be underestimated. Accordingly, in a case where a motor torque Tm5 equivalent to a motor torque obtained by subtracting the engine torque estimate value TeX from the driver request torque Tdrv is generated as shown in (2) of Fig. 7, a drive torque actually transmitted to the driving front wheels 91 excessively increases. Consequently, as shown in (3) of Fig. 7, the vehicle acceleration $\alpha$ suddenly increases after time t5, therefore generating a shift shock.

Moreover, according to the second known gear shift control device shown in Fig. 8, throughout a period (from time t1 to time t8) of a gear shift operation, a motor torque Tm6 is not generated (Tm6 = 0). Accordingly, no drive torque is transmitted to the driving front wheels 91 during a period of time while the clutch 4 is brought into the disconnected state and changing gears of the gear train 33 is conducted (during a period from time t4 to time t5). Consequently, no vehicle acceleration $\alpha$ is generated during the period from time t4 to time t5 as shown in (3) of Fig. 8. Thus, because no vehicle acceleration $\alpha$ is generated even though an accelerator pedal is operated by a driver, the driver feels that a loss of acceleration feel is generated during the gear shift operation.

As described above, according to the gear shift control device of the embodiment, throughout the period of the gear shift operation (from time t1 to time t8), the substantially stable drive torque and the substantially stable vehicle acceleration $\alpha$ may be obtained. Therefore, according to the gear shift control device of the embodiment, a loss of acceleration feel and a shift shock may not be generated during the gear shift operation.

In addition, the hybrid vehicle drive system 1 may start or drive the hybrid vehicle only by means of the motor torque Tm while not utilizing the engine torque Te. In a case were a braking effect is exerted on the hybrid vehicle, the hybrid vehicle drive system 1 is configured so that electric power regeneration may be conducted by the motor generator 5 in accordance with driving of the driving front wheels 91. A configuration of the hybrid vehicle drive system 1 may not be limited to the configuration illustrated in Fig. 1. Various gear shift control methods may be applied to the hybrid vehicle drive system 1 of the embodiment or the configuration of the hybrid vehicle drive system 1 of the embodiment may be modified within the scope of the claims.

## Claims

1. A gear shift control device for a hybrid vehicle drive system (1) for controlling the hybrid vehicle drive system (1) which comprises an automatic transmission (3) including an input shaft (31) configured to rotate by an engine torque (Te) which is outputted from an output shaft (21) of an engine (2) mounted to a vehicle and which is controlled by an output control mechanism (23, 28), and an output shaft (32) rotatably connected to a driving wheel (91), the automatic transmission (3) selectively engaging one of plural gear sets of a gear train (33) by a gear switching mechanism (34, 35), the gear train (33) allowing the input shaft (31) and the output shaft (32) to rotatably connect to each other with various gear ratios; a clutch (4) configured to be operated between a connected state where the output shaft (21) of the engine (2) and the input shaft (31) of the automatic transmission (3) are rotatably connected to each other and a disconnected state where the output shaft (21) and the input shaft (31) are disconnected from each other; a clutch actuation mechanism (48) adjusting a clutch torque (Tc) transmitted by the clutch (4) to the input shaft (31) of the automatic transmission (3); and a motor (5) rotatably connected to the output shaft (32) of the automatic transmission (3) and the driving wheel (91), the motor (5) generating a motor torque (Tm) which is addable to the engine torque (Te) and driving the driving wheel (91) by the motor torque (Tm), the gear shift control device controlling the hybrid vehicle drive system (1) to change a selection of the gear sets of the gear train (33) of the automatic transmission (3), the gear shift control device comprising:

a torque indication means for indicating a drive torque required for the driving wheel (91) as a driver request torque (Tdrv) converted into the engine torque (Te), the drive torque being determined by an operation amount of an acceleration means operated by a driver;

a gear shift control means for, when a gear shift condition is fulfilled, reducing the engine torque (Te) by the output control mechanism (23, 28) and driving the motor (5) to generate the motor torque (Tm), for bringing the clutch (4) in the disconnected state by the clutch actuation mechanism (48), for, after changing the selection of the gear sets of the gear train (33) by the gear switching mechanism (34, 35), returning the clutch (4) to the connected state by the clutch actuation mechanism (48), and for reducing the motor torque (Tm) and increasing the engine torque (Te); and

a motor torque computing means for computing the motor torque (Tm) **characterized in that** said motor torque computing means computes the motor torque (Tm) on the basis of a first subtraction value (Tm1) during a period of time while a rotational difference (ΔN) obtained by subtracting a rotation speed (Ni) of the input shaft (31) of the automatic transmission (3) from a rotation speed (Ne) of the output shaft (21) of the engine (2) exceeds a first predetermined value (N1) after changing the selection of the gear sets of the gear train (33) by the gear switching mechanism (34, 35) so as to increase the gear ratios, the first subtraction value (Tm1) being obtained by subtracting the clutch torque (Tc) from the driver request torque (Tdrv).

2. The gear shift control device according to Claim 1, wherein when the rotational difference (ΔN) is decreased to be equal to or lower than a second predetermined value (N2) after changing the selection of the gear sets of the gear train (33) by the gear switching mechanism (34, 35) so as to increase the gear ratios, the motor torque computing means computes the motor torque (Tm) on the basis of a second subtraction value (Tm2) obtained by subtracting an estimate value (TeX) of the engine torque (Te) from the driver request torque (Tdrv).

3. The gear shift control device according to Claim 2, wherein the second predetermined value (N2) is lower than the first predetermined value (N1), and
wherein the motor torque computing means utilizes the first subtraction value (Tm1) until the rotational difference (ΔN) reaches the second predetermined value (N2) while gradually decreasing after changing the selection of the gear sets of the gear train (33) by the gear switching mechanism (34, 35) so as to increase the gear ratios, the motor torque computing means utilizing the second subtraction value (Tm2) in a case where the rotational difference (ΔN) is decreased to be equal to or lower than the second predetermined value (N2),
wherein in a case where the rotational difference (ΔN) decreased to be equal to or lower than the second predetermined value (N2) varies to exceed the second predetermined value (N2) and does not exceed the first predetermined value (N1), the motor torque computing means continuously utilizes the second subtraction value (Tm2), and
wherein in a case where the rotational difference (ΔN) decreased again exceeds the first predetermined value (N1), the motor torque computing means utilizes the first subtraction value (N1).

4. The gear shift control device according to one of Claims 1 to 3, when a speed reduction ratio between the output shaft (21) of the engine (2) and the driving wheel (91) is defined as an engine speed reduction ratio (DEFe) and a speed reduction ratio between an output shaft of the motor (5) and the driving wheel (91) is defined as a motor speed reduction ratio (DEFm), the motor torque computing means computes a motor torque (Tgm) at the output shaft of the motor (5) by multiplying the first subtraction value (Tm1) or the second subtraction value (Tm2) by the engine speed reduction ratio (DEFe) and by dividing the multiplied first subtraction value (Tm1) or the multiplied second subtraction value (Tm2) by the motor speed reduction ratio (DEFm).

**Patentansprüche**

1. Getriebeumschalt-Steuereinrichtung für ein Hybridfahrzeug-Antriebssystem (1) zum Steuern des Hybridfahrzeug-Antriebssystems (1) mit einem Automatikgetriebe (3), das eine Eingangswelle (31), die zum Drehen durch ein Brennkraftmaschinendrehmoment (Te) ausgebildet ist, das von einer Ausgangswelle (21) einer Brennkraftmaschine (2) ausgegeben wird, die an einem Fahrzeug montiert ist, und das über einen Ausgabesteuermechanismus (23, 28) gesteuert wird, und eine Ausgangswelle (32) aufweist, die drehbar mit einem Antriebsrad (91) verbunden ist, wobei das Automatikgetriebe (3) wahlweise einen aus mehreren Zahnradsätzen eines Rädergetriebes (33) mittels eines Getriebeumschaltmechanismus (35) ergreift, wobei das Rädergetriebe (33) es der Eingangswelle (31) und der Ausgangswelle (32) ermöglicht, sich drehbar miteinander mit verschiedenen Übersetzungsverhältnissen zu verbinden; einer Kupplung (4), die ausgebildet ist, zwischen einem verbundenen Zustand, bei dem die Ausgangswelle (21) der Brennkraftmaschine (2) und die Eingangswelle (31) des Automatikgetriebes (3) drehbar miteinander verbunden sind, und einem nicht-verbundenen Zustand betätigt zu werden, bei dem die Ausgangswelle (21) und die Eingangswelle (31) voneinander gelöst sind; einem Kupplungsbetätigungsmechanismus (48), der ein Kupplungsdrehmoment (Tc) einstellt, das von der Kupplung (4) auf die Eingangswelle (31) des Automatikgetriebes (3) übertragen wird; und einem Motor (5), der drehbar mit der Ausgangswelle (32) des Automatikgetriebes (3) und dem Antriebsrad (91) verbunden ist, wobei der Motor (5) ein Motordrehmoment (Tm) erzeugt, das zu dem Brennkraftmaschinendrehmoment (Te) hinzufügbar ist, und das Antriebsrad (91) durch das Motordrehmoment (Tm) antreibt, wobei die Getriebeumschalt-Steuereinrichtung das Hybridfahrzeug-Antriebssystem (1) zum Ändern einer Auswahl aus den Zahnradsätzen des Rädergetriebes (33) des Automatikgetriebes (3) steuert, wobei die Getriebeumschalt-Steuereinrichtung enthält:

ein Drehmomentanzeigemittel zum Anzeigen eines Antriebsdrehmoments, das für das Antriebsrad (91) erforderlich ist, als ein Fahreranforderungsdrehmoment (Tdrv), das in das Brennkraftmaschinendrehmoment (Te) umgewandelt wird, wobei das Antriebsdrehmoment über einen Betätigungsumfang eines Beschleunigungsmittels, das von einem Fahrer betätigt wird, bestimmt wird;

ein Getriebeumschaltsteuermittel zum, wenn eine Getriebeumschaltbedingung erfüllt ist, Reduzieren des Motordrehmoments (Te) durch den Ausgabesteuermechanismus (23, 28) und Antreiben des Motors (5) zum Erzeugen des Motordrehmoments (Tm), zum Bringen der Kupplung (4) in den nicht-verbundenen Zustand über den Kupplungsbetätigungsmechanismus (48), zum Zurückkehren der Kupplung (4) in den verbundenen Zustand über den Kupplungsbetätigungsmechanismus (48), nach dem Ändern der Auswahl aus den Zahnradsätzen des Rädergetriebes (33) durch den Getriebeumschaltmechanismus (34, 35), und zum Reduzieren des Motordrehmoments (Tm) und Erhöhen des Brennkraftmaschinendrehmoments (Te); und

ein Motordrehmoment-Berechnungsmittel zum Berechnen des Motordrehmoments (Tm),

**dadurch gekennzeichnet, dass** das Motordrehmoment-Berechnungsmittel das Motordrehmoment auf der Basis eines ersten Subtraktionswerts (Tm1) während einer Zeitspanne, bei der eine Drehdifferenz (∆N), die durch Subtrahieren einer Drehzahl (Ni) der Eingangswelle (31) des Automatikgetriebes (3) von einer Drehzahl (Ne) der Ausgangswelle (21) des Motors (2) erhalten wird, einen ersten vorgegebenen Wert (N1) nach dem Ändern der Auswahl aus den Zahnradsätzen des Rädergetriebes (33) durch den Getriebeumschaltmechanismus (34, 35) überschreitet, so dass die Übersetzungsverhältnisse vergrößert werden, wobei der erste Subtraktionswert (Tm1) durch Subtrahieren des Kupplungsdrehmoments (Tc) von dem Fahreranforderungsdrehmoment (Tdrv) erhalten wird.

2. Getriebeumschalt-Steuereinrichtung nach Anspruch 1, in der, wenn sich die Drehdifferenz (∆N) verringert, so dass sie gleich oder geringer als ein zweiter vorgegebener Wert (N2) nach dem Ändern der Auswahl aus den Zahnradsätzen des Rädergetriebes (33) durch den Getriebeumschaltmechanismus (34, 35) ist, so dass die Übersetzungsverhältnisse vergrößert werden, das Motordrehmoment-Berechnungsmittel das Motordrehmoment (Tm) auf der Basis eines zweiten Subtraktionswerts (Tm2) berechnet, der durch Subtrahieren eines Schätzwerts (TeX) des Brennkraftmaschinendrehmoments (Te) von dem Fahreranforderungsdrehmoment (Tdrv) erhalten wird.

3. Getriebeumschalt-Steuereinrichtung nach Anspruch 2, in der der zweite vorgegebene Wert (N2) geringer ist als der erste vorgegebene Wert (N1), und

In der das Motordrehmoment-Berechnungsmittel den ersten Subtraktionswert (Tm1) verwendet bis die Drehdifferenz (∆N) den zweiten vorgegebenen Wert (N2) erreicht, während es allmählich abnimmt, nach dem Ändern der Auswahl aus den Zahnradsätzen des Rädergetriebes (33) durch den Getriebeumschaltmechanismus (34, 35), so dass die Übersetzungsverhältnisse vergrößert werden, wobei das Motordrehmoment-Berechnungsmittel den zweiten Subtraktionswert (Tm2) in einem Fall verwendet, bei dem die Drehdifferenz (∆N) sich verringert, das sie gleich oder geringer als der zweite vorgegebene Wert (N2) ist,

wobei in einem Fall, bei dem die Drehdifferenz (∆N), die sich verringert, so dass sie gleich oder geringer als der zweite vorgegebene Wert (N2) ist, zum Überschreiten des zweiten vorgegebenen Werts (N2) variiert und den ersten vorgegebenen Wert (N1) nicht überschreitet, das Motordrehmoment-Berechnungsmittel den zweiten Subtraktionswert (Tm2) kontinuierlich verwendet, und

wobei in einem Fall, bei dem die Drehdifferenz (∆N), die sich erneut verringert, den ersten vorgegebenen Wert (N1) überschreitet, das Motordrehmoment-Berechnungsmittel den ersten Subtraktionswert (N1) verwendet.

4. Getriebeumschalt-Steuereinrichtung nach einem der Ansprüche 1 bis 3, in der, wenn ein Drehzahlreduzierungsverhältnis zwischen der Ausgangswelle (21) der Brennkraftmaschine (2) und dem Antriebsrad (91) als ein Brennkraftmaschinendrehzahl-Verringerungsverhältnis (DEFe) definiert ist und ein Drehzahlreduzierungsverhältnis zwischen einer Ausgangswelle des Motors (5) und dem Antriebsrad (91) als ein Motordrehzahl-Verringerungsverhältnis (DEFn) definiert ist, das Motordrehmoment-Berechnungsmittel ein Motordrehmoment (Tgm) an der Ausgangswelle des Motors (5) berechnet durch Multiplizieren des ersten Subtraktionswerts (Tm1) oder des zweiten Subtraktionswerts (Tm2) mit dem Brennkraftmaschinendrehzahl-Verringerungsverhältnis (DEFe) und durch Teilen des multiplizierten ersten Subtraktionswerts (Tm1) oder des multiplizierten zweiten Subtraktionswerts (Tm2) durch das Motordrehzahl-Verringerungsverhältnis (DEFm).

**Revendications**

1. Dispositif de commande de changement de vitesse pour un système d'entraînement de véhicule hybride (1) destiné à commander le système d'entraînement de véhicule hybride (1) qui comprend une transmission automatique (3) incluant un arbre d'entrée (31) configuré pour tourner par un couple de moteur thermique (Te) qui est sorti d'un arbre de sortie (21) d'un moteur thermique (2) monté sur un véhicule et qui est commandé par un mécanisme de commande de sortie (23, 28), et un arbre de sortie (32) relié de manière rotative à une roue d'entraînement (91), la transmission automatique (3) engageant sélectivement l'un d'une pluralité de jeux d'engrenages d'un train d'engrenages (33) par un mécanisme de commutation d'engrenage (34, 35), le train d'engrenages (33) permettant à l'arbre d'entrée (31) et à l'arbre de sortie (32) d'être connectés en rotation l'un à l'autre avec différents rapports d'engrenage ; un embrayage (4) configuré pour fonctionner entre un état connecté où l'arbre de sortie (21) du moteur thermique (2) et l'arbre d'entrée (31) de la transmission automatique (3) sont connectés en rotation l'un à l'autre et un état déconnecté où l'arbre de sortie (21) et l'arbre d'entrée (31) sont déconnectés l'un de l'autre ; un mécanisme d'actionnement d'embrayage (48) ajustant un couple d'embrayage (Tc) transmis par l'embrayage (4) à l'arbre d'entrée (31) de la transmission automatique (3) ; et un moteur (5) connecté en rotation à l'arbre de sortie (32) de la transmission automatique (3) et la roue d'entraînement (91), le moteur (5) générant un couple de moteur (Tm) qui peut être ajouté au couple de moteur thermique (Te) et entraînant la roue d'entraînement (91) par le couple de moteur (Tm), le dispositif de commande de changement de vitesse commandant le système d'entraînement de véhicule hybride (1) pour changer une sélection des jeux d'engrenages du train d'engrenages (33) de la transmission automatique (3), le dispositif de commande de changement de vitesse comprenant :

   un moyen d'indication de couple pour indiquer un couple d'entraînement nécessaire pour la roue d'entraînement (91) en tant que couple de demande d'entraîneur (Tdrv) converti en couple de moteur thermique (Te), le couple d'entraînement étant déterminé par un degré d'actionnement d'un moyen d'accélération actionné par un entraîneur ;
   un moyen de commande de changement de vitesse pour, quand une condition de changement de vitesse est remplie, réduire le couple de moteur thermique (Te) par le mécanisme de commande de sortie (23, 28) et entraînant le moteur (5) pour générer le couple de moteur (Tm), pour amener l'embrayage (4) dans l'état déconnecté par le mécanisme d'actionnement d'embrayage (48), pour, après changement de la sélection des jeux d'engrenages du train d'engrenages (33) par le mécanisme de commutation d'engrenage (34, 35), ramener l'embrayage (4) à l'état connecté par le mécanisme d'actionnement d'embrayage (48), et pour réduire le couple de moteur (Tm) et augmenter le couple de moteur thermique (Te) ; et
   un moyen de calcul de couple de moteur pour calculer le couple de moteur (Tm)

   **caractérisé en ce que** ledit moyen de calcul de couple de moteur calcule le couple de moteur (Tm) sur la base d'une première valeur de soustraction (Tm1) durant une période de temps alors qu'une différence de rotation ($\Delta N$) obtenue en soustrayant une vitesse de rotation (Ni) de l'arbre d'entrée (31) de la transmission automatique (3) d'une vitesse de rotation (Ne) de l'arbre de sortie (21) du moteur thermique (2) dépasse une première valeur prédéterminée (N1) après changement de la sélection des jeux d'engrenages du train d'engrenages (33) par le mécanisme de commutation d'engrenage (34, 35) de manière à augmenter les rapports d'engrenage, la première valeur de soustraction (Tm1) étant obtenue en soustrayant le couple d'embrayage (Tc) du couple de demande d'entraîneur (Tdrv).

2. Dispositif de commande de changement de vitesse selon la revendication 1, dans lequel, quand la différence de rotation ($\Delta N$) est diminuée pour être égale ou inférieure à une seconde valeur prédéterminée (N2) après changement de la sélection des jeux d'engrenages du train d'engrenages (33) par le mécanisme de commutation d'engrenage (34, 35) de manière à augmenter les rapports d'engrenage, le moyen de calcul de couple de moteur calcule le couple de moteur (Tm) sur la base d'une seconde valeur de soustraction (Tm2) obtenue en soustrayant une valeur d'estimation (TeX) du couple de moteur thermique (Te) du couple de demande d'entraîneur (Tdrv).

**3.** Dispositif de commande de changement de vitesse selon la revendication 2, dans lequel la seconde valeur prédéterminée (N2) est inférieure à la première valeur prédéterminée (N1), et

dans lequel le moyen de calcul de couple de moteur utilise la première valeur de soustraction (Tm1) jusqu'à ce que la différence de rotation (∆N) atteigne la seconde valeur prédéterminée (N2) tout en diminuant progressivement après changement de la sélection des jeux d'engrenages du train d'engrenages (33) par le mécanisme de commutation d'engrenage (34, 35) de manière à augmenter les rapports d'engrenage, le moyen de calcul de couple de moteur utilisant la seconde valeur de soustraction (Tm2) dans un cas où la différence de rotation (∆N) est diminuée pour être égale ou inférieure à la seconde valeur prédéterminée (N2),

dans lequel, dans un cas où la différence de rotation (∆N) qui a diminué pour être égale ou inférieure à la seconde valeur prédéterminée (N2) varie pour dépasser la seconde valeur prédéterminée (N2) et ne dépasse pas la première valeur prédéterminée (N1), le moyen de calcul de couple de moteur utilise en continu la seconde valeur de soustraction (Tm2), et

dans lequel, dans un cas où la différence de rotation (∆N) diminuée à nouveau dépasse la première valeur prédéterminée (N1), le moyen de calcul de couple de moteur utilise la première valeur de soustraction (N1).

**4.** Dispositif de commande de changement de vitesse selon l'une des revendications 1 à 3, quand un rapport de réduction de vitesse entre l'arbre de sortie (21) du moteur thermique (2) et la roue d'entraînement (91) est défini comme un rapport de réduction de vitesse de moteur thermique (DEFe) et un rapport de réduction de vitesse entre un arbre de sortie du moteur (5) et la roue d'entraînement (91) est défini comme un rapport de réduction de vitesse de moteur (DEFm), le moyen de calcul de couple de moteur calcule un couple de moteur (Tgm) au niveau de l'arbre de sortie du moteur (5) en multipliant la première valeur de soustraction (Tm1) ou la seconde valeur de soustraction (Tm2) par le rapport de réduction de vitesse de moteur thermique (DEFe) et en divisant la première valeur de soustraction multipliée (Tm1) ou la seconde valeur de soustraction multipliée (Tm2) par le rapport de réduction de vitesse de moteur (DEFm).

F I G. 1

FIG.2

# FIG.3

Fully connected state

Clutch torque Tc

Disconnected state

0    Operation amount Ma of clutch actuator    Mmax

# FIG. 4

(1) Gear stage

(2) Gear shifting flag F1

(3) Shift control flag F2

(4) Engine rotation speed Ne
and
Input rotation speed Ni of TM

(5) Engine torque Te
and
Clutch torque Tc

(6) Motor torque Tm

# FIG. 5

```
                    ┌─────────────────┐
                    │      START      │
                    └─────────────────┘
                             │
                             ▼
                          ╱     ╲   ⌐ S1
                        ╱  Is Flag F1 ON  ╲      No
                      ╱   during gear       ╲──────────┐
                        ╲   shifting?      ╱            │
                          ╲             ╱               │
                             │ Yes                      │
                             ▼                          │
                          ╱     ╲   ⌐ S2                │
                        ╱  Is a falling ╲     No        │
                      ╱   of shift control ╲────────────┼──┐
                     ╱  flag F2 from ON to OFF ╲        │  │
                       ╲   confirmed?    ╱              │  │
                          ╲          ╱                  │  │
                             │ Yes                      │  │
                             ▼                          │  │
          ΔN>N1           ╱     ╲   ⌐ S3      N2≧ΔN     │  │
        ┌───────────────╱  ΔN > N1 ?  ╲───────────┐    │  │
        │                ╲  ΔN > N2 ? ╱           │    │  │
        │                  ╲       ╱              │    │  │
        │                 N1≧ΔN>N2                │    │  │
        │                     │                   │    │  │
        ▼  ⌐S4                ▼  ⌐S6              ▼ ⌐S5 │  │
┌──────────────┐    ┌──────────────┐    ┌──────────────┐ │
│ Compute Tm1  │    │ Compute Tm1  │    │ Compute Tm2  │ │
│ from first   │    │ or Tm2 from  │    │ from second  │ │
│ computing    │    │ computing    │    │ computing    │ │
│ equation     │    │ equation     │    │ equation     │ │
│              │    │ previously   │    │              │ │
│              │    │ utilized     │    │              │ │
└──────────────┘    └──────────────┘    └──────────────┘ │
        └───────────────────┼───────────────────┘        │
                            ╳◄─────────────────────────────┘
                             │
                             ▼
                    ┌─────────────────┐
                    │       END       │
                    └─────────────────┘
```

# FIG. 6

(1) Engine torque Te and Clutch torque Tc

Tdrv

Tc

TeY

t2 t3 TeX

(2) Motor torque Tm

Tdrv Tm1

Tm2

(3) Vehicle acceleration $\alpha$

t1   t4   t5   t7 t8

EP 2 594 445 B1

# FIG. 7

(1) Engine torque Te
  and
Clutch torque Tc

Tdrv

Tc

TeY

t2 t3 TeX

(2) Motor torque Tm

Tdrv Tm5

(3) Vehicle acceleration α

t1    t4    t5    t8

EP 2 594 445 B1

# FIG. 8

## Prior Art

(1) Engine torque Te
   and
   Clutch torque Tc

Tdrv

Tc

TeY

t2 t3 TeX

t

(2) Motor torque Tm

Tm6=0

t

(3) Vehicle acceleration $\alpha$

t1        t4        t5        t8

t

EP 2 594 445 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002188716 A

- US 2004147365 A1